# EUROPEAN PATENT SPECIFICATION

(11) **EP 3 162 769 B1**
(45) Date of publication and mention of the grant of the patent: **27.06.2018**
(21) Application number: 16166834.8
(22) Date of filing: 25.04.2016
(51) Int. Cl.: C02F 9/00, C02F 1/00, H04L 12/46, C02F 1/28, C02F 1/44, C02F 101/20

(54) **METHOD FOR CONTROLLING WATER OUTPUT OF WATER PURIFIER AND WATER PURIFIER**
VERFAHREN ZUR STEUERUNG DER AUSGABE VON WASSERREINIGER UND WASSERREINIGER
PROCÉDÉ DE COMMANDE DE SORTIE D'EAU D'ÉPURATEUR D'EAU ET PURIFICATEUR D'EAU

(30) Priority: 28.10.2015 CN 201510714128
(43) Date of publication of application: 03.05.2017
(73) Proprietor: Xiaomi Inc., Beijing 100085 (CN)
(72) Inventor: WU, Ke, 100085 BEIJING (CN); LIU, Xinyu, 100085 BEIJING (CN); CHEN, Tao, 100085 BEIJING (CN)
(74) Representative: Perrot, Emilie

(56) References cited:
- CN-A- 105 198 023
- CN-A- 105 301 998
- CN-A- 105 320 009
- US-A1- 2012 080 364

## Description

### TECHNICAL FIELD

The present invention relates to the technical field of smart home, and more particularly, relates to a method for controlling water output of a water purifier and a water purifier.

### BACKGROUND

Along with continuous development of science and technology, advanced technologies are continuously applied to daily life of people, thus improving life quality of people. For example, domestic water is no longer single tap water, and at present, the tap water can be treated by a water purifier to obtain different water qualities. In prior arts, when a user needs to obtain water of different water qualities from the water purifier, the user can only manually select a water output type, and the water purifier cannot automatically output water of a corresponding water quality according to a water collecting container or a content in the container, resulting in that time is wasted and use efficiency of the water purifier is reduced.

US 2012/080364 describes a water provisioning system which can supply dechlorinated tap water, purified drinking water, or ozonated water, depending on the setting of a selection switch.

### SUMMARY

This invention provides a method and apparatus for controlling water output of a water purifier, a water purifier, a computer program and a recording medium, which may solve the problem of low use efficiency of a water purifier in related arts.

According to a first aspect, the invention relates to a method for controlling water output of a water purifier, comprising:
judging whether a container is placed in a water collecting region of the water purifier;
judging whether there is a content in the container when the container is placed in the water collecting region;
acquiring recognition information of the container when there is no content in the container, and determining category information of the container based on the recognition information; determining a water output type information matching with the container as reference water output type information based on the category information of the container;
acquiring content information of the container when there is content in the container, and determining category information of the content based on the content information; determining a water output type information matching with the content as reference water output type information based on the category information of the content;
determining information of a corresponding water output route according to the reference water output type information; and
according to the information of the water output route, controlling the water purifier to output water according to the water output route.

In a particular embodiment, the step of judging whether there is content in the container comprises:
capturing an overlook image of the container;
judging whether the overlook image of the container contains an image of the content; and
determining that there is content in the container when the overlook image of the container contains the image of the content.

In a particular embodiment, the recognition information of the container comprises an image of the container;
the step of determining category information of the container based on the recognition information of the container comprises:
looking up an image matching with the image of the container from prestored images as a container reference image; and
determining category information associated with the container reference image as category information of the container.

In a particular embodiment, the recognition information of the container comprises information carried by an electronic label of the container;
the step of determining category information of the container based on the recognition information of the container comprises:
looking up category information of the container from the information carried by the electronic label of the container.

In a particular embodiment, the content information of the container comprises an image of the content;
the step of determining category information of the content based on the content information of the container comprises:
looking up an image matching with the image of the content from prestored images as a content reference image; and
determining category information associated with the content reference image as category information of the content.

In a particular embodiment, the content information of the container comprises information carried by an electronic label of the content;
the step of determining category information of the content based on the content information of the container comprises:
looking up the category information of the content from the information carried by the electronic label of the content.

In a particular embodiment, the step of determining a water output type information matching with the container based on the category information of the container comprises:
acquiring a preset matching relation between the category information and the information of water output type; and
looking up a water output type information matching with the category information of the container as information of the water output type matching with the container based on the matching relation.

In a particular embodiment, the step of determining a water output type information matching with the content based on the category information of the content comprises:
acquiring a preset matching relation between the category information and the information of water output type; and
looking up a water output type information matching with the category information of the content as information of the water output type matching with the content based on the matching relation.

In a particular embodiment, the step of determining information of a corresponding water output route according to the reference water output type information comprises:
acquiring a preset corresponding relation between the information of water output type and the information of the water output route; and
looking up information of a water output route corresponding to the reference water output type information based on the corresponding relation.

In a particular embodiment, the water output route comprises one or more of: a primary water route, a first filtering level water route and a second filtering level water route, wherein, water from the primary water route contains more impurity than water from the first filtering level water route, and water from the first filtering level water route contains more impurity than water from the second filtering level water route.

In a particular embodiment, the electronic label comprises one or more of: an electronic label containing an NFC chip, an electronic label containing a low power consumption Bluetooth chip, an electronic label containing a low power consumption Wi-Fi chip, an electronic label containing a low power consumption ZigBee chip and an electronic label containing an RFID chip.

In a particular embodiment, the water output type comprises one or more of: output of unpurified water, and output of first purified water and second purified water, wherein, the first purified water contains more impurity than the second purified water.

According to a second aspect, the invention relates to an apparatus for controlling water output of a water purifier, the apparatus comprising:
a first judging unit configured to judge whether a container is placed in a water collecting region of the water purifier;
a second judging unit configured to judge whether there is a content in the container when the container is placed in the water collecting region;
a first acquiring unit, configure to acquire recognition information of the container when there is no content in the container;
a first recognition unit configured to determine category information of the container based on the recognition information;
a first determining unit configured to determine a water output type information matching with the container as reference water output type information based on the category information of the container;
a second acquiring unit configured to acquire content information of the container when there is content in the container,
a second recognition unit configured to determine category information of the content based on the content information;
a second determining unit configured to determine a water output type information matching with the content as reference water output type information based on the category information of the content;
a third determining unit configured to determine information of a corresponding water output route according to the reference water output type information; and
a control unit configured to, according to the information of the water output route, control the water purifier to output water according to the water output route.

In a particular embodiment, the second judging unit includes:
a collecting subunit configured to collect an overlook image of the container;
a judging subunit configured to judge whether the overlook image of the container contains an image of the content; and
a determining subunit configured to determine that there is content in the container when the overlook image of the container contains the image of the content.

In a particular embodiment, the recognition information of the container comprises an image of the container;
the first recognition unit includes:
a container image looking up subunit configured to look up an image matching with the image of the container from prestored images as a container reference image; and
a container category determining subunit configured to determine category information associated with the container reference image as category information of the container.

In a particular embodiment, the recognition information of the container comprises information carried by an electronic label of the container;
the first recognition unit includes:
a container category information looking up subunit configured to look up category information of the container from the information carried by the electronic label of the container.

In a particular embodiment, the content information of the container comprises an image of the content;
the second recognition unit includes:
a content image looking up subunit configured to look up an image matching with the image of the content from prestored images as a content reference image; and
a content category determining subunit configured to determine category information associated with the content reference image as category information of the content.

In a particular embodiment, the content information of the container comprises information carried by an electronic label of the content;
the second recognition unit includes:
a content category information looking up subunit configured to look up the category information of the content from the information carried by the electronic label of the content.

In a particular embodiment, the first determining unit includes:
a first matching relation acquiring subunit configured to acquire a preset matching relation between the category information and the information of water output type; and
a first water output type looking up subunit configured to look up a water output type information matching with the category information of the container as information of the water output type matching with the container based on the matching relation.

In a particular embodiment, a second matching relation acquiring subunit configured to acquire a preset matching relation between the category information and the information of water output type; and
a second water output type looking up subunit configured to look up a water output type information matching with the category information of the content as information of the water output type matching with the content based on the matching relation.

In a particular embodiment, the third determining unit includes:
a corresponding relation acquiring subunit configured to acquire a preset corresponding relation between the information of water output type and the information of the water output route; and
a water output route information looking up subunit configured to look up information of a water output route corresponding to the reference water output type information based on the corresponding relation.

In a particular embodiment, the water output route comprises one or more of: a primary water route, a first filtering level water route and a second filtering level water route, wherein, water from the primary water route contains more impurity than water from the first filtering level water route, and water from the first filtering level water route contains more impurity than water from the second filtering level water route.

In a particular embodiment, the electronic label comprises one or more of: an electronic label containing an NFC chip, an electronic label containing a low power consumption Bluetooth chip, an electronic label containing a low power consumption Wi-Fi chip, an electronic label containing a low power consumption ZigBee chip and an electronic label containing an RFID chip.

In a particular embodiment, the water output type comprises one or more of: output of unpurified water, and output of first purified water and second purified water, wherein, the first purified water contains more impurity than the second purified water.

According to a third aspect, the invention relates to a water purifier, comprising:
a processor;
a memory for storing a command executable by the processor;
wherein, the processor is configured to:
   judge whether a container is placed in a water collecting region of the water purifier;
   judge whether there is a content in the container when the container is placed in the water collecting region;
   acquire recognition information of the container when there is no content in the container, and determine category information of the container based on the recognition information; determine a water output type information matching with the container as reference water output type information based on the category information of the container;
   acquire content information of the container when there is content in the container, and determine category information of the content based on the content information; determine a water output type information matching with the content as reference water output type information based on the category information of the content;
   determine information of a corresponding water output route according to the reference water output type information; and
   according to the information of the water output route, control the water purifier to output water according to the water output route.

In one particular embodiment, the steps of the method for controlling water output of a water purifier are determined by computer program instructions.

Consequently, according to a fourth aspect, the invention is also directed to a computer program for executing the steps of a method for controlling water output of a water purifier as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Technical solutions provided in embodiments of the invention have following beneficial effects:
According to a method for controlling water output of a water purifier provided in embodiments of the invention, whether there is a content in a container is judged when the container is placed in a water collecting region of the water purifier, when there is no content in the container, reference water output type information is determined based on category information of the container, when there is content in the container, the reference water output type information is determined based on category information of the content, information of a corresponding water output route is determined according to the reference water output type information, thus controlling the water purifier to output water according to the water output route. A user does not need to select a water output type and use efficiency of the water purifier is improved.

According to another method for controlling water output of a water purifier provided in embodiments of the invention, category information of a container or a content of a container is determined based on recognition information of the container or content information of the container, reference water output type information is judged based on the category information, information of a corresponding water output route is determined according to the reference water output type information, thus controlling the water purifier to output water according to the water output route. A user does not need to select a water output type and use efficiency of the water purifier is further improved.

According to another method for controlling water output of a water purifier provided in embodiments of the invention, the information of water output type matching with above container or content is looked up by a preset matching relation between category information and the information of water output type as reference water output type information, information of a corresponding water output route is determined according to the reference water output type information, thus controlling the water purifier to output water according to the water output route. A user does not need to select a water output type and use efficiency of the water purifier is further improved.

According to another method for controlling water output of a water purifier provided in an embodiment of the invention, by a preset corresponding relation between the information of water output type and information of a water output route, information of a water output route corresponding to the reference water output type information is looked up, thus controlling the water purifier to output water according to the water output route. A user does not need to select a water output type and use efficiency of the water purifier is further improved.

It should be understood that both the foregoing general description and the following detailed description are only exemplary and explanatory and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a flow chart showing a method for controlling water output of a water purifier according to an exemplary embodiment of the invention;
Fig. 1B is a schematic diagram showing a method of a water output route according to an exemplary embodiment of the invention;
Fig. 2 is a flow chart showing another method for controlling water output of a water purifier according to an exemplary embodiment of the invention;
FIG. 3 is a flow chart showing another method for controlling water output of a water purifier according to an exemplary embodiment of the invention;
FIG. 4 is a flow chart showing another method for controlling water output of a water purifier according to an exemplary embodiment of the invention;
FIG. 5 is a block diagram showing an apparatus for controlling water output of a water purifier according to an exemplary embodiment of the invention;
FIG. 6 is a block diagram showing another apparatus for controlling water output of a water purifier according to an exemplary embodiment of the invention;
FIG. 7 is a block diagram showing another apparatus for controlling water output of a water purifier according to an exemplary embodiment of the invention;
FIG. 8 is a block diagram showing another apparatus for controlling water output of a water purifier according to an exemplary embodiment of the invention;
FIG. 9 is a block diagram showing another apparatus for controlling water output of a water purifier according to an exemplary embodiment of the invention;
FIG. 10 is a block diagram showing another apparatus for controlling water output of a water purifier according to an exemplary embodiment of the invention;
FIG. 11 is a block diagram showing another apparatus for controlling water output of a water purifier according to an exemplary embodiment of the invention;
FIG. 12 is a block diagram showing another apparatus for controlling water output of a water purifier according to an exemplary embodiment of the invention;
FIG. 13 is a block diagram showing another apparatus for controlling water output of a water purifier according to an exemplary embodiment of the invention;
FIG. 14 is a drawing showing an exemplary system architecture capable of applying an embodiment of the invention according to an exemplary embodiment of the invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The terms used in the invention are only intended to describe the specific embodiments rather than to limit the invention. The terms such as "a/an", "the" and "said" in single forms used in the invention and the appended claims are also intended to include plural forms, unless clearly specified otherwise in the context. It should be noted that, the term "and/or" used herein includes any or all combinations of one or more related listed items.

It should be noted that although terms such as "first" "second" and "third" are used to describe various information, such information shall not be limited to these terms. These terms are only used to distinguish information of the same type. For example, when not departing from the scope of the invention, first information may also be named as second information, and vice versa. Depending on the context, the word "if" used herein may be interpreted as "when" or "determining that ... in response to".

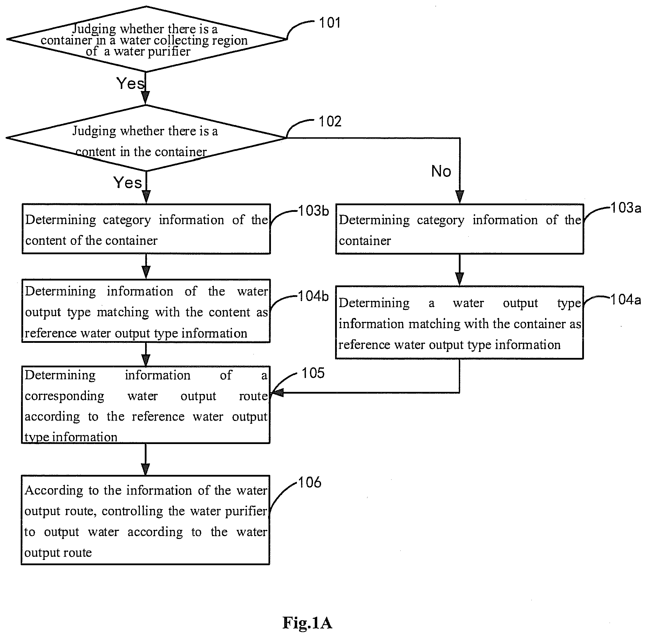

Fig. 1A is a flow chart showing a method for controlling water output of a water purifier according to an exemplary embodiment of the invention. The method can be performed by the water purifier and comprises following steps:
In step 101, whether a container is placed in a water collecting region of the water purifier is judged.

Generally speaking, the water purifier is provided with one or more faucets. The container can collect water by being placed in a certain region range below the faucet of the water purifier. The water collecting region of the water purifier is a region in that any container can collect water if placed therein, and the water collecting region of the water purifier may be a region of a space. It can be understood that the invention does not limit a specific defining manner of the water collecting region of the water purifier. The container in the present embodiment can be any container.

In an implementation of the present embodiment, whether the container is placed in the water collecting region of the water purifier can be judged by analyzing an image of the water collecting region of the water purifier. Specifically, the image of the water collecting region of the water purifier can be captured in real time by adopting a camera device (such as a camera). It can be understood that the camera device can be arranged at any position wherein it is possible to capture the water collecting region of the water purifier, and the invention does not limit a specific position for arranging the camera device. Next, whether the image contains an image of the container is judged. Specifically, an image of the water collecting region without the container of the water purifier can be acquired and stored in advance as a background image, then the image captured in real time is compared with the prestored background image, parts in the captured image different from the background image are analyzed to determine whether it's the image of the container and judge whether the image contains the image of the container. If the captured image contains the image of the container, it can be determined that the container is placed in the water collecting region.

In another implementation of the present embodiment, whether the container is placed in the water collecting region of the water purifier can be judged by detecting an inductive signal generated by an electronic label of the container. Specifically, firstly, whether an inductive signal larger than or equal to a preset intensity exists in above water collecting region is detected, and the inductive signal is generated by the electronic label of the container. Along with development of technology, at present, some commodities have electronic labels, which can store various information of corresponding commodities, such as, production date, commodity name, commodity category and manufacturers. When the container with the electronic label is placed in the water collecting region of the water purifier, a detection device capable of reading the electronic label can be adopted to detect the inductive signal generated by the electronic label of the container, and the signal being larger than or equal to the preset intensity. The detection device can be arranged at any position wherein it is possible to detect the inductive signal generated by the electronic label of the container, and a specific position of the detection device is not limited in the invention. When the detection device detects an inductive signal larger than or equal to the preset intensity in the above water collecting region, it is determined that the container is placed in the water collecting region. The electronic label comprises one or more of: an electronic label containing an NFC chip, an electronic label containing a low power consumption Bluetooth chip, an electronic label containing a low power consumption Wi-Fi chip, an electronic label containing a low power consumption ZigBee chip, and an electronic label containing an RFID chip, etc.

In another implementation of the present embodiment, whether the container is placed in the water collecting region of the water purifier can be judged by adopting infrared rays. For example, an infrared emitter and an infrared receiver are arranged at certain positions around the water collecting region. When the container is not placed in the water collecting region, the infrared rays emitted by the infrared emitter can penetrate through the water collecting region, and then are absorbed by the infrared receiver. If the container is placed in the water collecting region, the container blocks the infrared rays, and the infrared receiver cannot receive the infrared rays emitted from the infrared emitter. Hence, whether the container is placed in the water collecting region can be determined by detection of the infrared rays.

It is understandable that whether the container is placed in the water collecting region of the water purifier can be judged by any other manners, which are not limited in the invention.

In step 102, whether there is a content in the container when the container is placed in the water collecting region is judged;
In the present embodiment, whether there is a content in the container is judged, namely whether the container is empty is judged, so as to determine a reference water output type based on a category of the container when the container is empty, and determine a reference water output type based on a category of the content in the container when the container is not empty.

In one implementation of the present embodiment, whether there is content in the container can be judged by an overlook image of the container. Specifically, firstly, the overlook image of the container can be captured by adopting a camera device to ensure that a relatively complete image in the container can be acquired. Then the overlook image of the container is analyzed to judge whether the overlook image of the container contains the image of the content. Generally speaking, the interior of the container is relatively flat and smooth, and in addition, even if there are patterns in the container, the pattern is fixed without change or move. Therefore, whether the overlook image of the container contains the image of the content can be judged. If the overlook image of the container contains the image of the content, it is determined that there is content in the container.

In another implementation of the present embodiment, whether there is content in the container can be judged by an ultrasonic technology. Specifically, ultrasonic waves are emitted right above the container to detect whether the bottom of the container is flat, and it is determined that there is content in the container if the bottom of the container is not flat.

It is understandable that whether there is content in the container can be judged by any other implementable manners, and the invention does not limit specific manners for judging whether there is content in the container.

In step 103a, category information of the container is determined when there is no content in the container.

In the present embodiment, the container category can be a category for classifying the containers, for example, the container category comprises a cup, a bowl, a lunchbox, a vegetable basin, a washbasin, a garbage can and the like. It can be understood that the container can also comprise other categories, and the invention does not limit the specific container category.

In the present embodiment, the category information of the container can be recognized by using recognition information of the container. The recognition information of the container can be information for recognizing the container category. For example, the recognition information of the container can be an image of the container, and can be information carried by an electronic label of the container. It can be understood that the recognition information of the container can be other information for recognizing the container category, and the invention does not limit a specific manner of the recognition information. The electronic label may be an electronic label containing an NFC chip, an electronic label containing a low power consumption Bluetooth chip, an electronic label containing a low power consumption Wi-Fi chip, an electronic label containing a low power consumption ZigBee chip, and an electronic label containing an RFID chip, etc.

In step 104a, a water output type information matching with the container is determined as reference water output type information based on the category information of the container.

Generally speaking, the water purifier can discharge unfiltered tap water, and can also discharge water filtered by different filter cores. For example, the tap water can be filtered by an ultrafiltration membrane to filter sand and the like therein to obtain clean water. The clean water is then filtered by activated carbon, PP cotton and an RO (Reverse Osmosis Membrane) to filter water scale, heavy metal, germs and the like to obtain pure water. The tap water, clean water and pure water can be respectively discharged by controlling valves of the water purifier;
In the present embodiment, the water output type comprises one or more of: output of unpurified water, and output of first purified water and second purified water, wherein, the first purified water contains more impurity than the second purified water. For example, the first purified water can be clean water, the second purified water can be pure water, etc. It can be understood that the water output type can also comprise water in other types, such as third purified water and the fourth purified water, and the like, wherein the third purified water is purer than the second purified water and the fourth purified water is purer than the third purified water.

In the present embodiment, different containers can be matched with different water output types. For example, the container in the category of a cup can be matched with output of pure water, and when the cup is used for collecting water, the water purifier can discharge pure water. The container in the category of the bowl, lunchbox and the vegetable basin is matched with output of clean water, and when the bowl, lunchbox and the vegetable basin are used for collecting water, the water purifier can discharge clean water. The container in the category of the wash basin and the garbage can may be matched with output of tap water, and when the bowl, lunchbox and the vegetable basin are used for collecting water, the water purifier can discharge tap water.

In the present embodiment, matching relations of the category information of different containers and the information of water output type can be stored in advance. The matching relations between the category information of different containers and the information of water output type can be set by a user or defaulted by a system, which is not limited by the invention.

In step 103b, the category information of the content in the container is determined when there is content in the container;
In the present embodiment, some contents may be placed in the container placed in the water collecting region, for example, apples, grapes, clothes to be washed or the like. Category of the content can be a category for classifying the content. For example, the content category can comprise fruit, vegetable, clothes, grain and the like. It can be understood that the content can comprise other categories, and the invention does not limit a specific content category.

In the present embodiment, the content category can be recognized by using content information of the container. The content information is information for recognizing the content category. For example, the content information can be an image of the content of the container, and can be information carried by an electronic label of the content of the container. It can be understood that the content information can be other information for recognizing the content category information of the container, and the invention does not limit a specific form of the content information.

In step 104b, a water output type information matching with the content is determined as reference water output type information based on the category information of the content.

In the present embodiment, different contents of the container matching with different water output types. For example, the content in the category of fruit can be matched with output of pure water, and when the container containing apples is placed in the water collecting region, the water purifier discharges pure water. The content in the category of vegetable can be matched with output of clean water, and when the container containing vegetable is placed in the water collecting region, the water purifier discharges clean water. The content in the category of clothes can be matched with output of tap water, and when the container containing clothes is placed in the water collecting region, the water purifier discharges tap water.

In the present embodiment, matching relations of the category information of different contents and the information of water output type can be stored in advance. The matching relations between the category information of different contents and the information of water output type can be set by a user or defaulted by a system, which is not limited by the invention.

In step 105, information of a corresponding water output route is determined according to the reference water output type information.

In the present embodiment, the water output route is a water route wherein water discharged by the water purifier flows, and the water output route comprises one or more of: a primary water route, a first filtering level water route and a second filtering level water route, wherein, water from the primary water route contains more impurity than water from the first filtering level water route, and water from the first filtering level water route contains more impurity than water from the second filtering level water route. For example, water from the primary water route is unpurified tap water, water from the first filtering level water route is clean water, water from the second filtering level water route is pure water and the like. It can be understood that other water routes can be comprised, for example, a third filtering level water route, a fourth filtering level water route and the like, wherein, water from the third filtering level water route is purer than water from the second filtering level water route, and water from the fourth filtering level water route is purer than the water from the third filtering level water route.

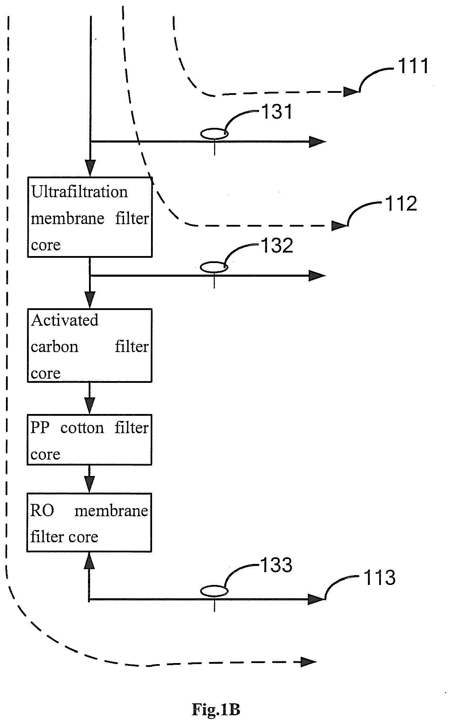

In the present embodiment, the water output route can be a water route without filter cores, and can also correspond to different filter cores or filter core combinations. As shown in FIG. 1B, for example, a water output route 111 is the primary water output route, water flowing through the primary water output route being unpurified and being tap water. A water output route 112 is a first filtering level water route, which corresponds to a filter core of an activated ultrafiltration membrane, and water flowing through the first filtering level water route is clean water after being filtered by the filter core of an ultrafiltration membrane. A water output route 113 is a second filtering level water route, which corresponds to a filter core combination of the filter core of the ultrafiltration membrane, an activated carbon filter core, a PP cotton filter core and an RO (Reverse Osmosis membrane) filter core, and water flowing through the second filtering level water route is filtered by the filter core of the ultrafiltration membrane, the activated carbon filter core, the PP cotton filter core and the RO (Reverse Osmosis membrane) filter core, and is pure water, etc. It can be understood that various water output routes corresponding to different filter cores can be arranged, and the invention does not limit a filter core of the water output route.

In the present embodiment, different water output routes can be selected to discharge water by controlling opening and closing of different valves. As shown in FIG. 1B, for example, if the water output route 111 is selected to discharge water, a valve 131 is opened, and valves 132 and 133 are closed. If the water output route 112 is selected to discharge water, a valve 132 is opened, and valves 131 and 133 are closed. If the water output route 113 is selected to discharge water, a valve 133 is opened, and valves 131 and 132 are closed. It can be understood that other valve arranging manners can be arranged, which is not limited by the invention.

In the present embodiment, different types of water may be output from different water output routes, therefore, different water output types correspond to different water output routes. For example, in combination with the example in FIG. 1B, for the water output route, output of the tap water can correspond to the water output route 111, output of the clean water can correspond to the water output route 112, and output of the pure water can correspond to the water output route 113. Corresponding relations between information of different water output types and information of water output routes can be stored in advance.

In the present embodiment, information of the water output routes is information according to which it is possible to select water output of the water output route, or control information according to which it is possible to select water output of the water output route. For example, the information of the water output route can be information for controlling opening and closing of preset valves. For example, in combination with the example in FIG. 1B, the information of the water output route corresponding to the water output route 111 can be information of controlling opening of the valve 131 and closing of the valves 132 and 133. The information of the water output route corresponding to the water output route 112 can be information of controlling opening of the valve 132 and closing of the valves 131 and 133. The information of the water output route corresponding to the water output route 113 can be information of controlling opening of the valve 133 and closing of the valves 131 and 132. It can be understood that the information of the water output route can be information in other forms, and the invention does not limit a specific form and content of the information of the water output route.

In step 106, according to the information of the water output route, the water purifier is controlled to output water according to the water output route.

In the present embodiment, according to the information of the water output route, the water purifier is controlled to output water according to the water output route. For example, in combination with the example in FIG. 1B, if the reference water output type is output of tap water, a corresponding water output route is the water output route 111, and the water purifier is controlled to output tap water according to the water output route 111 (by controlling opening of the valve 131 and closing of the valves 132 and 133). If the reference water output type is output of clean water, a corresponding water output route is the water output route 112, and the water purifier is controlled to output clean water according to the water output route 112 (by controlling opening of the valve 132 and closing of the valves 131 and 133). If the reference water output type is output of pure water, a corresponding water output route is the water output route 113, and the water purifier is controlled to output clean water according to the water output route 113 (by controlling opening of the valve 133 and closing of the valves 131 and 132).

According to the method controlling water output of a water purifier provided in above embodiment of the invention, whether there is a content in a container is judged when the container is placed in a water collecting region of the water purifier, when there is no content in the container, reference water output type information is determined based on category information of the container, when there is content in the container, the reference water output type information is determined based on category information of the content placed in the container, and information of a corresponding water output route is determined according to the reference water output type information, thus controlling the water purifier to output water according to the water output route. A user does not need to select a water output type and use efficiency of the water purifier is improved.

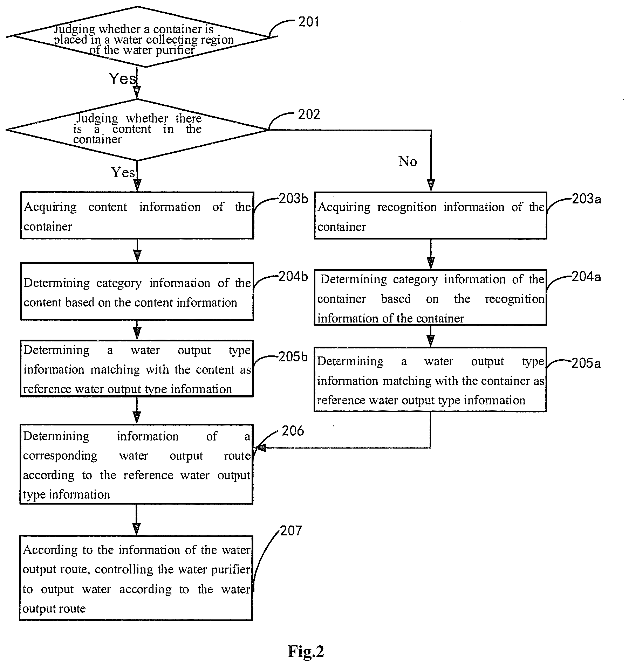

Fig. 2 is a flow chart showing another method for controlling water output of a water purifier according to an exemplary embodiment of the invention. The present embodiment describes a process of determining category information of a container and category information of a content in detail, and the method is performed by a water purifier and comprises following steps:
in step 201, whether a container is placed in a water collecting region of the water purifier is judged;
in step 202, whether there is a content in the container when the container is placed in the water collecting region is judged;
in step 203a, recognition information of the container is acquired when there is no content in the container,
in step 204a, category information of the container is determined based on the recognition information of the container.

In one implementation of the present embodiment, when the container is placed in the water collecting region, an image of the container can be captured by a camera device. It can be understood that the camera device can be arranged at any position where it is capable of capturing the image of the container placed in the water collecting region of the water purifier, and the invention does not limit a specific position for arranging the camera device. Next, an image matching with the image of the container is looked up from prestored images as a container reference image. Category information associated with the container reference image is determined as the category information of the container.

Specifically speaking, images of various containers can be prestored, and an associating relation between these images of the container and associated category information is stored. After the image of the container is acquired, an image closest to the image of the container is looked up from stored images of various containers as a container reference image. Then category information associated with the container reference image is looked up based on the associating relation as the category information of the container.

In another implementation of the present embodiment, when the container is placed in the water collecting region, an information carried by an electronic label of the container can be acquired by a reading device capable of reading the electronic information, wherein the information carried by the electronic label of the container comprises but is not limited to name information, category information, production data information, manufacturer information and the like of the container. The category information of the container can be looked up from the information carried by the electronic label of the container.

In another implementation of the present embodiment, when the container is placed in the water collecting region, the category information of the container can be determined by using information carried by the electronic label of the container (information carried by the electronic label of the container), and when the category information of the container is not judged, the category information of the container can be further determined by the image of the container (image of the container). It can be understood that the category information of the container can be continuously determined in other realizable manners if the category information of the container is still not judged.

In step 205a, a water output type information matching with the container is determined as reference water output type information based on the category information of the container.

In step 203b, content information of the container is acquired when there is content in the container;
In step 204b, category information of the content is determined based on the content information.

In the present embodiment, the content information of the container can be information according to which it is possible to recognize the content category. For example, the content information of the container can be an image of the content, and can also be information carried by an electronic label of the content. It can be understood that the content information can be other information according to which it is possible to recognize the content category, and the invention does not limit a specific form of the contained content information.

In one implementation of the present embodiment, when the container is placed in the water collecting region, an image of the content in the container can be captured by a camera device. Then an image matching with the image of the content is looked up from prestored images as a content reference image. Information associated with the content reference image is determined as category information of the content.

In another implementation of the present embodiment, when the container is placed in the water collecting region, information carried by the electronic label of the content of the container can be acquired by a reading device capable of reading the electronic label. The category information of the content can be looked up from the information carried by the electronic label of the content.

In another implementation of the present embodiment, when the container is placed in the water collecting region, the category information of the content can be determined by using information carried by the electronic label of the content of the container (information carried by the electronic label of the content), and when the category information of the content is not judged, the category information of the content can be further determined by the image of the content (image of the content of the container). It can be understood that if the category information of the content is still not judged, the category information of the content can be continuously determined in other realizable manners.

In step 205b, a water output type information matching with the content is determined as reference water output type information based on the category information of the content.

In step 206, information of a corresponding water output route is determined according to the reference water output type information.

In step 207, according to the information of the water output route, the water purifier is controlled to output water according to the water output route.

It needs to be noted that the same steps in the embodiment of FIG. 1A are not repeated in the embodiment of FIG. 2, and related content can refer to the embodiment of FIG. 1A.

According to the method for controlling water output of a water purifier provided in above embodiment of the invention, category information of a container or a content of a container is determined based on recognition information of the container or content information of the container, reference water output type information is judged based on the category information, information of a corresponding water output route is determined according to the reference water output type information, thus controlling the water purifier to output water according to the water output route. A user does not need to select a water output type and use efficiency of the water purifier is further improved.

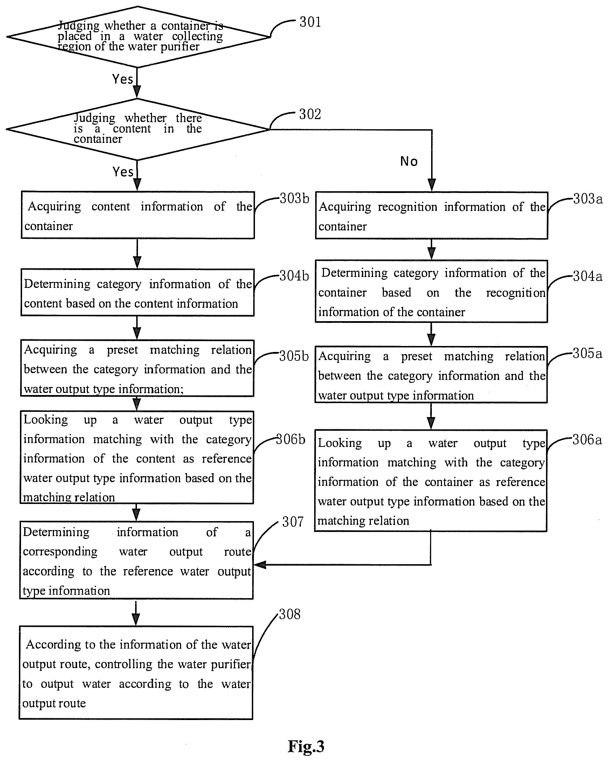

FIG. 3 is a flow chart showing another method for controlling water output of a water purifier according to an exemplary embodiment of the invention. The present embodiment describes a process of determining the information of water output type matching with a container based on category information of the container as well as determining the information of water output type matching with the content based on the category information of the content in detail, and the method is performed by a water purifier and comprises following steps:
in step 301, whether a container is placed in a water collecting region of the water purifier is judged;
in step 302, whether there is a content in the container when the container is placed in the water collecting region is judged;
in step 303a, recognition information of the container is acquired when there is no content in the container,
in step 304a, category information of the container is determined based on the recognition information of the container;
in step 305a, a preset matching relation between the category information and the information of water output type is acquired;
in step 306a, a water output type information matching with the category information of the container is looked up as reference water output type information based on the matching relation.

In the present embodiment, the matching relation between the category information and the water output type information can be preset and is then stored. For example, a cup can be matched with pure water; a bowl, lunchbox and vegetable basin can be matched with clean water; a wash basin and a garbage can may be matched with tap water, etc. It can be understood that the matching relation between the category and the water output type is preset by a user, or defaulted by a system which is not limited in the invention.

It needs to be noted that the preset matching relation between the category information and the water output type is stored in a local water purifier and can also be stored on a preset server. Therefore, when the preset matching relation between the category information and the water output type is acquired, the preset matching relation can be acquired locally or acquired from the preset server through a network.

In step 303b, content information of the container is acquired when there is content in the container.

In step 304b, category information of the content is determined based on the content information.

In step 305b, a preset matching relation between the category information and the water output type information is acquired.

In step 306b, a water output type information matching with the category information of the content is looked up as reference water output type information based on the matching relation.

In the present embodiment, the matching relation between the category information and the water output type information can be preset. For example, fruit is matched with output of pure water; vegetable is matched with output of clean water; clothes is matched with output of tap water and the like. It can be understood that the matching relation between the category information and the water output type information can be preset by a user, or defaulted by a system, which is not limited in the invention;
In step 307, information of a corresponding water output route is determined according to the reference water output type information.

In step 308, according to the information of the water output route, the water purifier is controlled to output water according to the water output route.

It needs to be noted that the same steps in the embodiment of FIG. 1A are not repeated in the embodiment of FIG. 3, and related content can refer to the embodiment of FIG. 1A.

According to the method for controlling water output of a water purifier provided in above embodiment of the invention, water output type information matching with above container or content is looked up by using a preset matching relation between category information and water output type information as reference water output type information, information of a corresponding water output route is determined according to the reference water output type information, thus controlling the water purifier to output water according to the water output route. A user does not need to select a water output type and use efficiency of the water purifier is further improved.

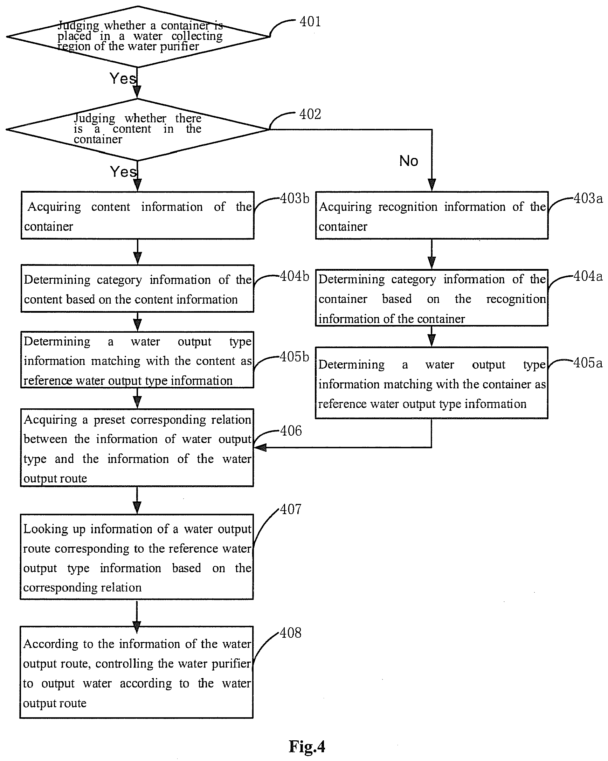

FIG. 4 is a flow chart showing another method for controlling water output of a water purifier according to an exemplary embodiment of the invention, the present embodiment describes a process of determining information of a corresponding water output route according to reference water output type information in detail, and the method is performed by a water purifier and comprises following steps:
in step 401, whether a container is placed in a water collecting region of the water purifier is judged;
in step 402, whether there is a content in the container when the container is placed in the water collecting region is judged;
in step 403a, recognition information of the container is acquired when there is no content in the container;
in step 404a, category information of the container is determined based on the recognition information of the container;
in step 405a, a water output type information matching with the container is determined as reference water output type information based on the category information of the container;
in step 403b, content information of the container is acquired when there is content in the container;
in step 404b, category information of the content is determined based on the content information;
in step 405b, a water output type information matching with the content as reference water output type information is determined based on the category information of the content;
in step 406, a preset corresponding relation between the water output type information and the information of the water output route is acquired;
in step 407, information of a water output route corresponding to the reference water output type information is looked up based on the corresponding relation.

In the present embodiment, a corresponding relation between the water output type information and the information of the water output route can be stored in advance. For example, output of the tap water corresponds to a water output route 111, output of the clean water corresponds to a water output route 112, and output of the pure water corresponds to a water output route 113, etc.

It needs to be noted that the corresponding relation between the water output type information and the water output route is stored in a local water purifier and can also be stored on a preset server. Therefore, when the corresponding relation between the water output type information and the water output route is acquired, the corresponding relation can be acquired locally or acquired from the preset server through a network.

In step 408, according to the information of the water output route, the water purifier is controlled to output water according to the water output route.

It needs to be noted that the same steps in the embodiment of FIG. 1A are not repeated in the embodiment of FIG. 4, and related content can refer to the embodiment of FIG. 1A.

According to the method for controlling water output of a water purifier provided in above embodiment of the invention, by a preset corresponding relation between water output type information and information of a water output route, information of a water output route corresponding to the reference water output type information is looked up, thus controlling the water purifier to output water according to the water output route. A user does not need to select a water output type and use efficiency of the water purifier is further improved.

It should be noted that although operations of a method of the invention are described in specific sequence in the drawings, it is not required or implied that these operations should be executed according to the specific sequence, or a desired result can be realized by necessarily executing all shown operations. On the contrary, steps as shown in the flow charts can be changed in executing sequence. Additionally or alternatively, some steps can be omitted, a plurality of steps can be combined into one step to be executed, and/or one step can be decomposed into a plurality of steps to be executed.

Corresponding to the embodiments of the method for controlling a water purifier to output water, the invention also provides embodiments of an apparatus for controlling water output of the water purifier and the applied water purifier.

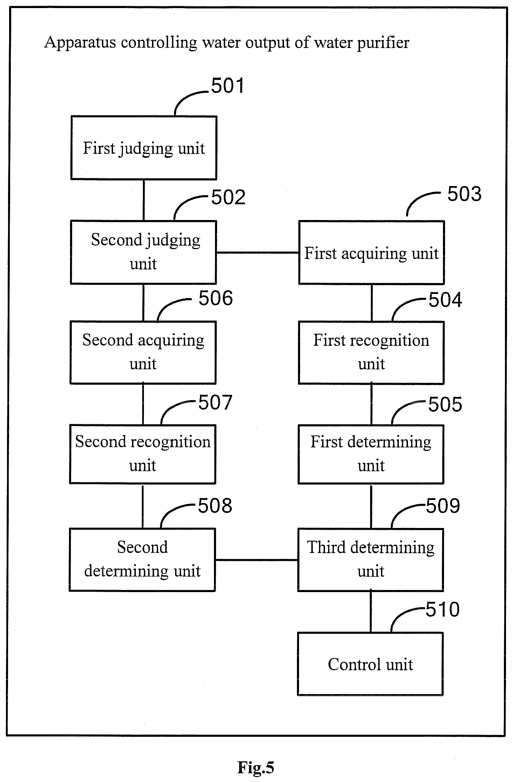

FIG. 5 is a block diagram showing an apparatus for controlling water output of a water purifier according to an exemplary embodiment of the invention, and the apparatus comprises: a first judging unit 501, a second judging unit 502, a first acquiring unit 503, a first recognition unit 504, a first determining unit 505, a second acquiring unit 506, a second recognition unit 507, a second determining unit 508, a third determining unit 509 and a control unit 510.

The first judging unit 501 is configured to judge whether a container is placed in a water collecting region of the water purifier.

The second judging unit 502 is configured to judge whether there is a content in the container when the container is placed in the water collecting region.

The first acquiring unit 503 is configured to acquire recognition information of the container when there is no content in the container.

The first recognition unit 504 is configured to determine category information of the container based on the recognition information.

The first determining unit 505 is configured to determine a water output type information matching with the container as reference water output type information based on the category information of the container.

The second acquiring unit 506 is configured to acquire content information of the container when there is content in the container.

The second recognition unit 507 is configured to determine category information of the content based on the content information.

The second determining unit 508 is configured to determine a water output type information matching with the content as reference water output type information based on the category information of the content.

The third determining unit 509 is configured to determine information of a corresponding water output route according to the reference water output type information.

The control unit 510 is configured to, according to the information of the water output route, control the water purifier to output water according to the water output route.

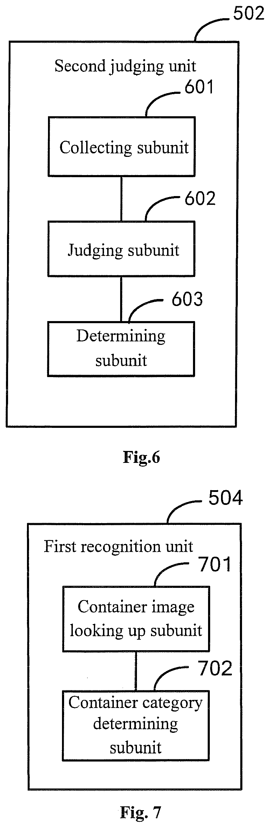

FIG. 6 is a block diagram showing another apparatus for controlling water output of a water purifier according to an exemplary embodiment of the invention, according to the embodiment based on the embodiment as shown in FIG. 5. The second judging unit 502 includes a collecting subunit 601, a judging subunit 602 and a determining subunit 603.

The collecting subunit 601 is configured to collect an overlook image of the container.

The judging subunit 602 is configured to judge whether the overlook image of the container contains an image of the content.

The determining subunit 603 is configured to determine that there is content in the container when the overlook image of the container contains the image of the content.

FIG. 7 is a block diagram showing another apparatus for controlling water output of a water purifier according to an exemplary embodiment of the invention, according to the embodiment based on the embodiment as shown in FIG. 5. The first recognition unit 504 includes a container image looking up subunit 701 and a container category determining subunit 702.

The container image looking up subunit 701 is configured to look up an image matching with the image of the container from preset images as a container reference image.

The container category determining subunit 702 is configured to determine category information associated with the container reference image as category information of the container.

The recognition information of the container comprises the image of the container.

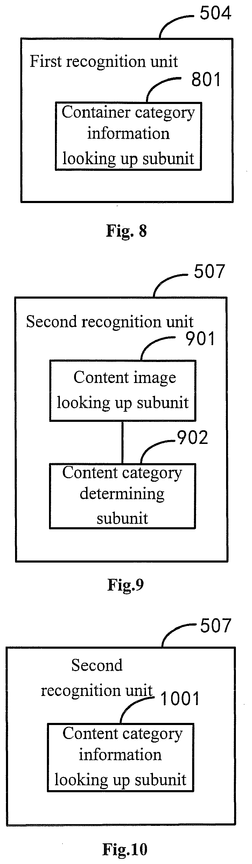

FIG. 8 is a block diagram showing another apparatus for controlling water output of a water purifier according to an exemplary embodiment of the invention, according to the embodiment based on the embodiment as shown in FIG. 5. The first recognition unit 504 includes a container category information looking up subunit 801 configured to look up category information of the container from information carried by an electronic label of the container.

The recognition information of the container comprises information carried by the electronic label of the container.

FIG. 9 is a block diagram showing another apparatus for controlling water output of a water purifier according to an exemplary embodiment of the invention, according to the embodiment based on the embodiment as shown in FIG. 5. The second recognition unit 507 includes a content image looking up subunit 901 and a content category determining subunit 902.

The content image looking up subunit 901 is configured to look up an image matching with the image of the content from prestored images as a content reference image.

The content category determining subunit 902 is configured to determine category information associated with the content reference image as category information of the content.

The content information of the container comprises the image of the content.

FIG. 10 is a block diagram showing another apparatus for controlling water output of a water purifier according to an exemplary embodiment of the invention, according to the embodiment based on the embodiment as shown in FIG. 5. The second recognition unit 507 includes: a content category information looking up subunit 1001 configured to look up the category information of the content from information carried by an electronic label of the content.

The content information of the container comprises information carried by the electronic label of the content.

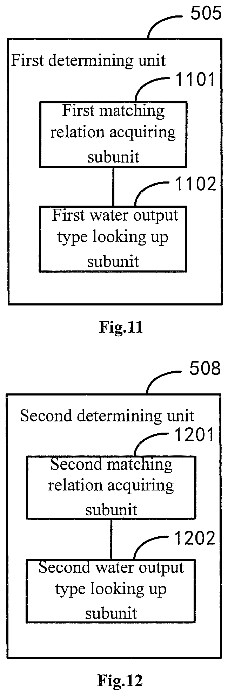

FIG. 11 is a block diagram showing another apparatus for controlling water output of a water purifier according to an exemplary embodiment of the invention, according to the embodiment based on the embodiment as shown in FIG. 5. The first determining unit 505 includes: a first matching relation acquiring subunit 1101 and a first water output type looking up subunit 1102.

The first matching relation acquiring subunit 1101 is configured to acquire a preset matching relation between the category information and the water output type information.

The first water output type looking up subunit 1102 is configured to look up a water output type information matching with the category information of the container as information of the water output type matching with the container based on the matching relation.

FIG. 12 is a block diagram showing another apparatus for controlling water output of a water purifier according to an exemplary embodiment of the invention, according to the embodiment based on the embodiment as shown in FIG. 5. The second determining unit 508 includes: a second matching relation acquiring subunit 1201, and a second water output type looking up subunit 1202.

The second matching relation acquiring subunit 1201 is configured to acquire a preset matching relation between the category information and the water output type information.

The second water output type looking up subunit 1202 is configured to look up a water output type information matching with the category information of the content as information of the water output type matching with the content based on the matching relation.

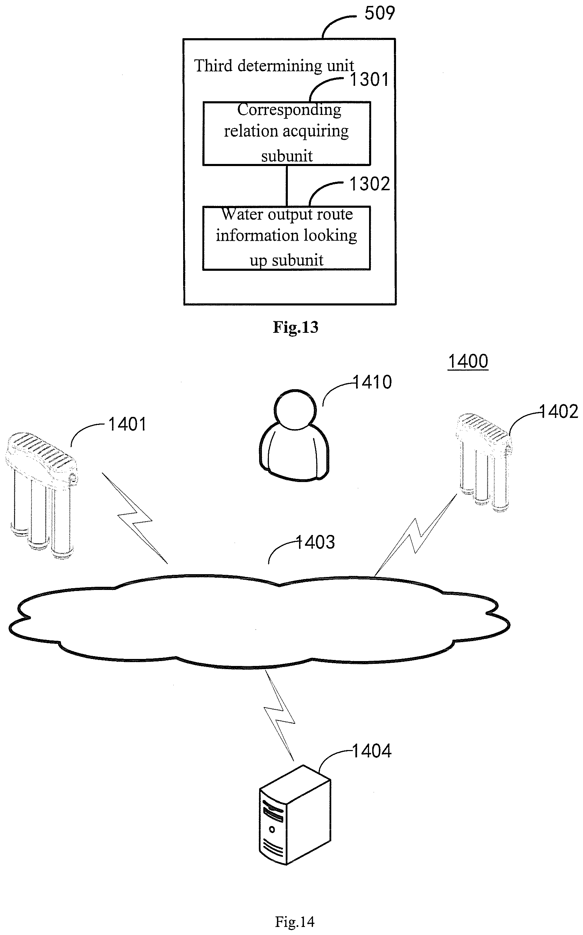

FIG. 13 is a block diagram showing another apparatus for controlling water output of a water purifier according to an exemplary embodiment of the invention, according to the embodiment based on the embodiment as shown in FIG. 5. Third determining unit 509 includes a corresponding relation acquiring subunit 1301 and a water output route information looking up subunit 1302.

The corresponding relation acquiring subunit 1301 is configured to acquire a preset corresponding relation between the water output type information and the information of the water output route.

The water output route information looking up subunit 1302 is configured to look up information of a water output route corresponding to the reference water output type information based on the corresponding relation.

In a further optional implementation, the water output route comprises one or more of: a primary water route, a first filtering level water route and a second filtering level water route, wherein, water from the primary water route contains more impurity than water from the first filtering level water route, and water from the first filtering level water route contains more impurity than water from the second filtering level water route.

In a further optional implementation, the electronic label comprises one or more of an electronic label containing an NFC chip, an electronic label containing a low power consumption Bluetooth chip, an electronic label containing a low power consumption Wi-Fi chip, an electronic label containing a low power consumption ZigBee chip and an electronic label containing an RFID chip.

In a further optional implementation, the water output type comprises one or more of: output of unpurified water, and output of first purified water and second purified water, wherein, the first purified water contains more impurity than the second purified water.

It should be understood that the apparatus can be preset in a water purifier, and can also be loaded onto the water purifier in manners such as downloading. Corresponding units in the apparatus cooperate with units in the water purifier to realize a solution of control over water output of the water purifier.

As for embodiments of the apparatus, since it basically corresponds to the embodiments of the method, related parts can refer to partial description in the embodiments of the method. The above described embodiments of the apparatus are only schematic, units described as separation parts may be physically separated or not, and parts as unit display may be physical units or not and may positioned at one position or distributed to a plurality of network units. Part or all of the modules can be selected according to practical requirements to realize aims of the invention. Those common skilled in the art can understand and implement the invention without creative labor.

FIG. 14 shows an exemplary system structure capable of applying embodiments of the invention.

As shown in FIG. 14, a system architecture 1400 may comprise water purifier devices 1401 and 1402, a network 1403 and a server 1404. The network 1403 provides a medium for a communication link among the water purifier devices 1401 and 1402 and the server 1404. The network 1403 may include various connection types, such as wired, wireless communication links, optical cables or the like.

A user 1410 can use the water purifier devices 1401 and 1402, which interact with server 1404 through the network 1403 to receive or upload information and the like.

The server 1404 may be a sever providing various services. The sever can perform treatments of storing, analyzing and the like on received data, and feeds a processing result back to the water purifier devices. The server can respond to a service request of the user to provide service. For example, the server can provide a preset matching relation between a category and a water output type to the water purifier devices or a corresponding relation between water output type information and information of a water output route to the water purifier devices. It can be understood that one server can provide one or more services, and the same service can be provided by a plurality of servers.

It should be understood that numbers of the water purifier devices, network and server in FIG. 14 are only schematic. The water purifier devices, network and server in any number can be arranged according to implementation requirements.

Correspondingly, the invention also provides a water purifier, comprising a processor; and a memory for storing a command executable by the processor, wherein the process is configured to:
judge whether a container is placed in a water collecting region of the water purifier;
judge whether there is content in the container when the container is placed in the water collecting region;
acquire recognition information of the container when there is no content in the container, and determine category information of the container based on the recognition information; determine a water output type information matching with the container as reference water output type information based on the category information of the container;
acquire content information of the container when there is content in the container, and determine category information of the content based on the content information; determine a water output type information matching with the content as reference water output type information based on the category information of the content;
determine information of a corresponding water output route according to the reference water output type information; and
according to the information of the water output route, control the water purifier to output water according to the water output route.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and embodiment be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for controlling water output of a water purifier, **characterized in that** it comprises:
judging (101, 201, 301, 401) whether a container is placed in a water collecting region of the water purifier;
judging (102, 202, 302, 402) whether there is a content in the container when the container is placed in the water collecting region;
acquiring (203a, 303a, 403a) recognition information of the container when there is no content in the container, and determining (103a, 204a, 304a, 404a) category information of the container based on the recognition information; determining (104a, 205a, 306a, 405a) a water output type information matching with the container as reference water output type information based on the category information of the container;
acquiring (203b, 303b, 403b) content information of the container when there is content in the container, and determining (103b, 204b, 304b, 404b) category information of the content based on the content information; determining (104b, 205b, 306b, 405b) a water output type information matching with the content as reference water output type information based on the category information of the content;
determining (105, 206, 307, 407) information of a corresponding water output route according to the reference water output type information; and
according to the information of the water output route, controlling (106, 207, 308, 408) the water purifier to output water according to the water output route.

2. The method according to claim 1, **characterized in that** the step (102, 202, 302, 402) of judging whether there is content in the container comprises:
capturing an overlook image of the container;
judging whether the overlook image of the container contains an image of the content; and
determining that there is content in the container when the overlook image of the container contains the image of the content.

3. The method according to claim 1, **characterized in that**:
the recognition information of the container comprises an image of the container;
the step (204a, 304a, 404a) of determining category information of the container based on the recognition information of the container comprises:
looking up an image matching with the image of the container from prestored images as a container reference image; and
determining category information associated with the container reference image as category information of the container.

4. The method according to claim 1, **characterized in that**:
the recognition information of the container comprises information carried by an electronic label of the container;
the step (204a, 304a, 404a) of determining category information of the container based on the recognition information of the container comprises:
looking up category information of the container from the information carried by the electronic label of the container.

5. The method according to claim 1, **characterized in that**:
the content information of the container comprises an image of the content;
the step (204b, 304b, 404b) of determining category information of the content based on the content information comprises:
looking up an image matching with the image of the content from prestored images as a content reference image; and
determining category information associated with the content reference image as category information of the content.

6. The method according to claim 1, **characterized in that**:
the content information of the container comprises information carried by an electronic label of the content;
the step (204b, 304b, 404b) of determining category information of the content based on the content information comprises:
looking up the category information of the content from the information carried by the electronic label of the content.

7. The method according to claim 1, **characterized in that** the step of determining a water output type information matching with the container based on the category information of the container comprises:
acquiring (305a) a preset matching relation between the category information and the water output type information; and
looking up (306a) a water output type information matching with the category information of the container as the water output type information matching with the container based on the matching relation.

8. The method according to claim 1, **characterized in that** the step of determining a water output type information matching with the content based on the category information of the content comprises:
acquiring (305b) a preset matching relation between the category information and the water output type information; and
looking up (306b) a water output type information matching with the category information of the content as the water output type information matching with the content based on the matching relation.

9. The method according to claim 1, **characterized in that** the step of determining information of a corresponding water output route according to the reference water output type information comprises:
acquiring (406) a preset corresponding relation between the information of the water output type and the information of the water output route; and
looking up (407) information of a water output route corresponding to the reference water output type information based on the corresponding relation.

10. The method according to claim 1, **characterized in that** the water output route comprises one or more of: a primary water route, a first filtering level water route and a second filtering level water route, wherein, water from the primary water route contains more impurity than water from the first filtering level water route, and water from the first filtering level water route contains more impurity than water from the second filtering level water route.

11. The method according to claim 4 or 6, **characterized in that** the electronic label comprises one or more of:
an electronic label containing an NFC chip, an electronic label containing a low power consumption Bluetooth chip, an electronic label containing a low power consumption Wi-Fi chip, an electronic label containing a low power consumption ZigBee chip and an electronic label containing an RFID chip.

12. The method according to any one of claims 1 to 10, **characterized in that** the water output type comprises one or more of: output of unpurified water, and output of first purified water and out of second purified water, wherein, the first purified water contains more impurity than the second purified water.

13. A water purifier, **characterized by** comprising:
a processor;
a memory for storing a command executable by the processor,
wherein, the processor is configured to:
judge whether a container is placed in a water collecting region of the water purifier;
judge whether there is content in the container when the container is placed in the water collecting region;
acquire recognition information of the container when there is no content in the container, and determine category information of the container based on the recognition information; determine a water output type information matching with the container as reference water output type information based on the category information of the container;
acquire content information of the container when there is content in the container, and determine category information of the content based on the content information; determine a water output type information matching with the content as reference water output type information based on the category information of the content;
determine information of a corresponding water output route according to the reference water output type information; and
according to the information of the water output route, control the water purifier to output water according to the water output route.

14. A computer program including instructions for executing the steps of a method for controlling water output of a water purifier according to any one of claims 1 to 12 when said program is executed by a computer.

15. A recording medium readable by a computer and having recorded thereon a computer program including instructions for executing the steps of a method for controlling water output of a water purifier according to any one of claims 1 to 12.

## Patentansprüche

1. Verfahren zum Steuern der Wasserausgabe eines Wasserreinigers, **dadurch gekennzeichnet, dass** es umfasst:
Beurteilen (101, 201, 301, 401), ob ein Behälter in einer Wasserauffangregion des Wasserreinigers platziert ist,
Beurteilen (102, 202, 302, 402), ob sich ein Inhalt in dem Behälter befindet, wenn der Behälter in der Wasserauffangregion platziert ist,
Erfassen (203a, 303a, 403a) von Erkennungsinformationen des Behälters, wenn sich kein Inhalt in dem Behälter befindet, und Bestimmen (103a, 204a, 304a, 404a) von Kategorie-Informationen des Behälters anhand der Erkenn ungsinformationen,
Bestimmen (104a, 205a, 306a, 405a) einer Wasserausgabetyp-Information, die mit dem Behälter übereinstimmt, als Referenz-Wasserausgabetyp-Information anhand der Kategorie-Informationen des Behälters,
Erfassen (203b, 303b, 403b) von Inhalts-Informationen des Behälters, wenn sich ein Inhalt in dem Behälter befindet, und
Bestimmen (103b, 204b, 304b, 404b) von Kategorie-Informationen des Inhalts anhand der Inhalts-Informationen,
Bestimmen (104b, 205b, 306b, 405b) einer Wasserausgabetyp-Information, die mit dem Inhalt übereinstimmt, als Referenz-Wasserausgabetyp-Information anhand der Kategorie-Informationen des Inhalts,
Bestimmen (105, 206, 307, 407) von Informationen einer entsprechenden Wasserausgabe-Route gemäß der Referenz-Wasserausgabetyp-Information, und
gemäß den Informationen der Wasserausgabe-Route, Veranlassen (106, 207, 308, 408) des Wasserreinigers, Wasser gemäß der Wasserausgabe-Route auszugeben.

2. Verfahren nach Anspruch 1, **dadurch gekennzeichnet, dass** der Schritt (102, 202, 302, 402) des Beurteilens, ob sich ein Inhalt in dem Behälter befindet, umfasst:
Aufnehmen eines Übersichtsbildes des Behälters,
Beurteilen, ob das Übersichtsbild des Behälters ein Bild des Inhalts enthält, und
Bestimmen, dass sich ein Inhalt in dem Behälter befindet, wenn das Übersichtsbild des Behälters das Bild des Inhalts enthält.

3. Verfahren nach Anspruch 1, **dadurch gekennzeichnet, dass**:
die Erkennungsinformationen des Behälters ein Bild des Behälters umfassen,
der Schritt (204a, 304a, 404a) des Bestimmens von Kategorie-Informationen des Behälters anhand der Erkennungsinformationen des Behälters umfasst:
Nachschlagen eines Bildes, das mit dem Bild des Behälters übereinstimmt, aus zuvor gespeicherten Bildern als ein Behälterreferenzbild, und
Bestimmen von Kategorie-Informationen, die mit dem Behälterreferenzbild verknüpft sind, als Kategorie-Informationen des Behälters.

4. Verfahren nach Anspruch 1, **dadurch gekennzeichnet, dass**:
die Erkennungsinformationen des Behälters Informationen umfassen, die durch ein elektronisches Etikett des Behälters transportiert werden,
der Schritt (204a, 304a, 404a) des Bestimmens von Kategorie-Informationen des Behälters anhand der Erkennungsinformationen des Behälters umfasst:
Nachschlagen von Kategorie-Informationen des Behälters aus den Informationen, die durch das elektronische Etikett des Behälters transportiert werden.

5. Verfahren nach Anspruch 1, **dadurch gekennzeichnet, dass**:
die Inhalts-Informationen des Behälters ein Bild des Inhalts umfassen,
der Schritt (204b, 304b, 404b) des Bestimmens von Kategorie-Informationen des Inhalts anhand der Inhalts-Informationen umfasst:
Nachschlagen eines Bildes, das mit dem Bild des Inhalts übereinstimmt, aus zuvor gespeicherten Bildern als ein Inhaltsreferenzbild, und
Bestimmen von Kategorie-Informationen, die mit dem Inhaltsreferenzbild verknüpft sind, als Kategorie-Informationen des Inhalts.

6. Verfahren nach Anspruch 1, **dadurch gekennzeichnet, dass**:
die Inhalts-Informationen des Behälters Informationen umfassen, die durch ein elektronisches Etikett des Inhalts transportiert werden,
der Schritt (204b, 304b, 404b) des Bestimmens von Kategorie-Informationen des Inhalts anhand der Inhalts-Informationen umfasst:
Nachschlagen der Kategorie-Informationen des Inhalts aus den Informationen, die durch das elektronische Etikett des Inhalts transportiert werden.

7. Verfahren nach Anspruch 1, **dadurch gekennzeichnet, dass** der Schritt des Bestimmens einer Wasserausgabetyp-Information, die mit dem Behälter übereinstimmt, anhand der Kategorie-Informationen des Behälters umfasst:
Erfassen (305a) einer voreingestellten Übereinstimmungsbeziehung zwischen den Kategorie-Informationen und den Wasserausgabetyp-Information, und
Nachschlagen (306a) einer Wasserausgabetyp-Information, die mit den Kategorie-Informationen des Behälters übereinstimmt, als die Wasserausgabetyp-Information, die mit dem Behälter übereinstimmt, anhand der, Ü berei nstimmungsbeziehung.

8. Verfahren nach Anspruch 1, **dadurch gekennzeichnet, dass** der Schritt des Bestimmens einer Wasserausgabetyp-Information, die mit dem Inhalt übereinstimmt, anhand der Kategorie-Informationen des Inhalts umfasst:
Erfassen (305b) einer voreingestellten Übereinstimmungsbeziehung zwischen den Kategorie-Informationen und der Wasserausgabetyp-Information, und
Nachschlagen (306b) einer Wasserausgabetyp-Information, die mit den Kategorie-Informationen des Inhalts übereinstimmt, als die Wasserausgabetyp-Information, die mit dem Inhalt übereinstimmt, anhand der Übereinstimmungsbeziehung.

9. Verfahren nach Anspruch 1, **dadurch gekennzeichnet, dass** der Schritt des Bestimmens von Informationen einer entsprechenden Wasserausgabe-Route gemäß der Referenz-Wasserausgabetyp-Information umfasst:
Erfassen (406) einer voreingestellten entsprechenden Beziehung zwischen den Informationen des Wasserausgabe-Typs und der Informationen der Wasserausgabe-Route, und
Nachschlagen (407) von Informationen einer Wasserausgabe-Route, die der Referenz-Wasserausgabetyp-Information entspricht, anhand der entsprechenden Beziehung.

10. Verfahren nach Anspruch 1, **dadurch gekennzeichnet, dass** die Wasserausgabe-Route eine primäre Wasserroute und/oder eine erste Filterungspegel-Wasserroute und/oder eine zweite Filterungspegel-Wasserroute umfasst, wobei Wasser von der primären Wasserroute mehr Verunreinigungen enthält als Wasser von der ersten Filterungspegel-Wasserroute und Wasser von der ersten Filterungspegel-Wasserroute mehr Verunreinigungen enthält als Wasser von der zweiten Filterungspegel-Wasserroute.

11. Verfahren nach Anspruch 4 oder 6, **dadurch gekennzeichnet, dass** das elektronische Etikett ein elektronisches Etikett, das einen NFC-Chip enthält, und/oder ein elektronisches Etikett, das einen Bluetooth-Chip mit niedrigem Stromverbrauch enthält, und/oder ein elektronisches Etikett, das einen Wi-Fi-Chip mit niedrigem Stromverbrauch enthält, und/oder ein elektronisches Etikett, das einen ZigBee-Chip mit niedrigem Stromverbrauch enthält, und/oder ein elektronisches Etikett, das einen RFID-Chip enthält, umfasst.

12. Verfahren nach einem der Ansprüche 1 bis 10, **dadurch gekennzeichnet, dass** der Wasserausgabe-Typ die Ausgabe von ungereinigtem Wasser und/oder die Ausgabe eines ersten gereinigten Wassers und/oder die Ausgabe eines zweiten gereinigten Wassers umfasst, wobei das erste gereinigte Wasser mehr Verunreinigungen enthält als das zweite gereinigte Wasser.

13. Wasserreiniger, **dadurch gekennzeichnet, dass** er umfasst:
einen Prozessor,
einen Speicher zum Speichern eines Befehls, der durch den Prozessor ausgeführt werden kann,
wobei die Prozessor dafür konfiguriert ist zum:
Beurteilen, ob ein Behälter in einer Wasserauffangregion des Wasserreinigers platziert ist,
Beurteilen, ob sich ein Inhalt in dem Behälter befindet, wenn der Behälter in der Wasserauffangregion platziert ist,
Erfassen von Erkennungsinformationen des Behälters, wenn sich kein Inhalt in dem Behälter befindet, und Bestimmen von Kategorie-Informationen des Behälters anhand der Erkennungsinformationen,
Bestimmen einer Wasserausgabetyp-Information, die mit dem Behälter übereinstimmt, als Referenz-Wasserausgabetyp-Information anhand der Kategorie-Informationen des Behälters,
Erfassen von Inhalts-Informationen des Behälters, wenn sich ein Inhalt in dem Behälter befindet, und
Bestimmen von Kategorie-Informationen des Inhalts anhand der Inhalts-Informationen,
Bestimmen einer Wasserausgabetyp-Information, die mit dem Inhalt übereinstimmt, als Referenz-Wasserausgabetyp-Information anhand der Kategorie-Informationen des Inhalts,
Bestimmen von Informationen einer entsprechenden Wasserausgabe-Route gemäß der Referenz-Wasserausgabetyp-Information, und
gemäß den Informationen der Wasserausgabe-Route, Veranlassen des Wasserreinigers, Wasser gemäß der Wasserausgabe-Route auszugeben.

14. Computerprogramm, das Instruktionen enthält, um die Schritte eines Verfahrens zum Steuern der Wasserausgabe eines Wasserreinigers nach einem der Ansprüche 1 bis 12 auszuführen, wenn das Programm durch einen Computer ausgeführt wird.

15. Aufzeichnungsmedium, das durch einen Computer gelesen werden kann und auf dem ein Computerprogramm aufgezeichnet ist, das Instruktionen enthält, um die Schritte eines Verfahrens zum Steuern der Wasserausgabe eines Wasserreinigers nach einem der Ansprüche 1 bis 12 auszuführen.

## Revendications

1. Procédé de commande d'une sortie d'eau d'un purificateur d'eau, **caractérisé en ce qu'**il comprend :
juger (101, 201, 301, 401) si un récipient est placé dans une zone de collecte d'eau du purificateur d'eau ;
juger (102, 202, 302, 402) s'il existe un contenu dans le récipient lorsque le récipient est placé dans la zone de collecte d'eau ;
acquérir (203a, 303a, 403a,) des informations de reconnaissance du récipient lorsqu'il n'y a pas de contenu dans le récipient, et déterminer (103a, 204a, 304a, 404a) des informations de catégorie du récipient sur la base des informations de reconnaissance ; déterminer (104a, 205a, 306a, 405a) des informations de type de sortie d'eau correspondant au récipient en tant qu'informations de type de sortie d'eau de référence sur la base des informations de catégorie du récipient ;
acquérir (203b, 303b, 403b) des informations de contenu du récipient lorsqu'il existe du contenu dans le récipient, et déterminer (103b, 204b, 304b, 404b) des informations de catégorie du contenu sur la base des informations de contenu ; déterminer (104b, 205b, 306b, 405b) des informations de type de sortie d'eau correspondant au contenu en tant qu'informations de type de sortie d'eau de référence sur la base des informations de catégorie du contenu ;
déterminer (105, 206, 307, 407) des informations d'une voie de sortie d'eau correspondante selon les informations de type de sortie d'eau de référence ; et
selon les informations de la voie de sortie d'eau, commander (106, 207, 308, 408) au purificateur d'eau de fournir en sortie de l'eau selon la voie de sortie d'eau.

2. Procédé selon la revendication 1, **caractérisé en ce que** l'étape (102, 202, 302, 402) consistant à juger s'il existe du contenu dans le récipient comprend:
capturer une image surplombante du récipient ;
juger si l'image surplombante du récipient contient une image du contenu ; et
déterminer qu'il existe du contenu dans le récipient lorsque l'image surplombante du récipient contient l'image du contenu.

3. Procédé selon la revendication 1, **caractérisé en ce que** :
les informations de reconnaissance du récipient comprennent une image du récipient ;
l'étape (204a, 304a, 404a) de détermination d'informations de catégorie du récipient sur la base des informations de reconnaissance du récipient comprend :
rechercher une image correspondant à l'image du récipient à partir d'images préenregistrées, en tant qu'une image de référence de récipient ; et
déterminer des informations de catégorie associées à l'image de référence de récipient en tant que des informations de catégorie du récipient.

4. Procédé selon la revendication 1, **caractérisé en ce que** :
les informations de reconnaissance du récipient comprennent des informations portées par une étiquette électronique du récipient ;
l'étape (204a, 304a, 404a) de détermination d'informations de catégorie du récipient sur la base des informations de reconnaissance du récipient comprend :
rechercher des informations de catégorie du récipient à partir des informations portées par l'étiquette électronique du récipient.

5. Procédé selon la revendication 1, **caractérisé en ce que** :
les informations de contenu du récipient comprennent une image du contenu ;
l'étape (204b, 304b, 404b) de détermination d'informations de catégorie du contenu sur la base des informations de contenu comprend :
rechercher une image correspondant à l'image du contenu à partir des images préenregistrées, en tant qu'une image de référence de contenu ; et
déterminer des informations de catégorie associées à l'image de référence de contenu en tant que des informations de catégorie du contenu.

6. Procédé selon la revendication 1, **caractérisé en ce que** :
les informations de contenu du récipient comprennent des informations portées par une étiquette électronique du contenu ;
l'étape (204b, 304b, 404b) de détermination d'informations de catégorie du contenu sur la base des informations de contenu comprend :
rechercher des informations de catégorie du contenu à partir des informations portées par l'étiquette électronique du contenu.

7. Procédé selon la revendication 1, **caractérisé en ce que** l'étape de détermination d'informations de type de sortie d'eau correspondant au récipient sur la base des informations de catégorie du récipient comprend :
acquérir (305a) une relation de correspondance prédéfinie entre les informations de catégorie et les informations de type de sortie d'eau ; et
rechercher (306a) des informations de type de sortie d'eau correspondant aux informations de catégorie du récipient, en tant que les informations de type de sortie d'eau correspondant au récipient sur la base de la relation de correspondance.

8. Procédé selon la revendication 1, **caractérisé en ce que** l'étape de détermination des informations de type de sortie d'eau correspondant au contenu sur la base des informations de catégorie du contenu comprend :
acquérir (305b) une relation de correspondance prédéfinie entre les informations de catégorie et les informations de type de sortie d'eau ; et
rechercher (306b) des informations de type de sortie d'eau correspondant aux informations de catégorie du contenu en tant que les informations de type de sortie d'eau correspondant au contenu sur la base de la relation de correspondance.

9. Procédé selon la revendication 1, **caractérisé en ce que** l'étape de détermination d'informations d'une voie de sortie d'eau correspondante selon les informations de type de sortie d'eau de référence comprend :
acquérir (406) une relation correspondante prédéfinie entre les informations de type de sortie d'eau et les informations de la voie de sortie d'eau ; et
rechercher (407) des informations d'une voie de sortie d'eau correspondant aux informations de type de sortie d'eau de référence sur la base de la relation correspondante.

10. Procédé selon la revendication 1, **caractérisé en ce que** la voie de sortie d'eau comprend une ou plusieurs voies parmi : une voie d'eau principale, une voie d'eau de premier niveau de filtrage et une voie d'eau de second niveau de filtrage, dans lequel, l'eau provenant de la voie d'eau principale contient plus d'impuretés que l'eau provenant de la voie d'eau de premier niveau de filtrage, et l'eau provenant de la voie d'eau de premier niveau de filtrage contient plus d'impuretés que l'eau provenant de la voie d'eau de second niveau de filtrage.

11. Procédé selon la revendication 4 ou 6, **caractérisé en ce que** l'étiquette électronique comprend une ou plusieurs étiquettes parmi :
une étiquette électronique contenant une puce NFC, une étiquette électronique contenant une puce Bluetooth à faible consommation d'énergie, une étiquette électronique contenant une puce Wi-Fi à faible consommation d'énergie, une étiquette électronique contenant une puce ZigBee à faible consommation d'énergie et une étiquette électronique contenant une puce RFID.

12. Procédé selon l'une quelconque des revendications 1 à 10, **caractérisé en ce que** le type de sortie d'eau comprend une ou plusieurs des sorties suivantes : une sortie d'eau non purifiée, et une sortie de première eau purifiée et une sortie de seconde eau purifiée, dans lequel la première eau purifiée contient plus d'impuretés que la seconde eau purifiée.

13. Purificateur d'eau, **caractérisé en ce qu'**il comprend :
un processeur ;
une mémoire destinée à stocker une instruction exécutable par le processeur,
dans lequel le processeur est configuré de manière à :
juger si un récipient est placé dans une zone de collecte d'eau du purificateur d'eau ;
juger s'il existe un contenu dans le récipient lorsque le récipient est placé dans la zone de collecte d'eau ;
acquérir des informations de reconnaissance du récipient lorsqu'il n'y a pas de contenu dans le récipient, et déterminer des informations de catégorie du récipient sur la base des informations de reconnaissance ;
déterminer des informations de type de sortie d'eau correspondant au récipient, en tant qu'informations de type de sortie d'eau de référence sur la base des informations de catégorie du récipient ;
acquérir des informations de contenu du récipient lorsqu'il existe du contenu dans le récipient, et déterminer des informations de catégorie du contenu sur la base des informations de contenu ;
déterminer des informations de type de sortie d'eau correspondant au contenu en tant qu'informations de type de sortie d'eau de référence, sur la base des informations de catégorie du contenu ;
déterminer des informations d'une voie de sortie d'eau correspondante selon les informations de type de sortie d'eau de référence ; et
selon les informations de la voie de sortie d'eau, commander au purificateur d'eau de fournir en sortie de l'eau selon la voie de sortie d'eau.

14. Programme informatique incluant des instructions pour exécuter les étapes d'un procédé de commande de sortie d'eau d'un purificateur d'eau selon l'une quelconque des revendications 1 à 12, lorsque ledit programme est exécuté par un ordinateur.

15. Support d'enregistrement lisible par un ordinateur et sur lequel est enregistré un programme informatique incluant des instructions pour exécuter les étapes d'un procédé de commande de sortie d'eau d'un purificateur d'eau selon l'une quelconque des revendications 1 à 12.
